# EUROPÄISCHE PATENTSCHRIFT

(11) **EP 2 145 116 B1**
(45) Veröffentlichungstag und Bekanntmachung des Hinweises auf die Patenterteilung: **18.09.2013**
(21) Anmeldenummer: 08758049.4
(22) Anmeldetag: 09.05.2008
(51) Int. Cl.: F16B 37/06, B23P 19/06

(54) **VERFAHREN ZUM ANBRINGEN EINES FÜGE- ODER FUNKTIONSELEMENTES AN EINEM FLACHMATERIAL, NIETVERBINDUNG SOWIE FÜGE- ODER FUNKTIONSELEMENT**
METHOD FOR APPLICATION OF A JOINT OR FUNCTION ELEMENT TO A PLANAR MATERIAL RIVET CONNECTION AND JOINT OR FUNCTION ELEMENT
PROCÉDÉ POUR FIXER UN ÉLÉMENT D'ASSEMBLAGE OU FONCTIONNEL SUR UN MATÉRIAU PLAT, ASSEMBLAGE RIVETÉ ET ÉLÉMENT D'ASSEMBLAGE OU FONCTIONNEL

(30) Priorität: 14.05.2007 DE 102007022907; 25.02.2008 DE 102008010868; 02.04.2008 DE 102008017178
(43) Veröffentlichungstag der Anmeldung: 20.01.2010
(73) Patentinhaber: Schmidt, Heiko, 93138 Lappersdorf (DE)
(72) Erfinder: Schmidt, Heiko, 93138 Lappersdorf (DE)
(74) Vertreter: Graf Glück Kritzenberger
(86) Internationale Anmeldenummer: PCT/DE2008/000792
(87) Internationale Veröffentlichungsnummer: WO 2008/138315

(56) Entgegenhaltungen:
- EP-A- 0 539 793
- EP-A- 1 500 461
- WO-A-2007/065398
- DE-A1- 4 410 475
- DE-U1- 20 215 488
- US-A- 1 579 875

## Beschreibung

Die Erfindung bezieht sich auf ein Verfahren gemäß Oberbegriff Patentanspruch 1

Verfahren zum Anbringen und/oder Fixieren von Funktions- oder Fügeelementen, insbesondere von Verbindungselementen, wie auch Muttern, Bolzen oder dergleichen an einem Flachmaterial, beispielsweise an einem aus einem Flachmaterial hergestellten Werkstück, sind in verschiedenen Ausführungen bekannt. So ist insbesondere auch ein Verfahren bekannt, bei dem das Verbinden bzw. Fixieren des jeweiligen Funktionselementes durch Vernieten im Bereich eines aus dem Flachmaterial durch bleibendes oder plastisches Verformen, d.h. durch Ziehen oder Pressen hergestellten domartigen Abschnitts erfolgt (EP 539 793 B1). Bei diesem bekannten Verfahren wird nach dem Fügen und während des Vernietens des am Funktionselement vorgesehenen Nietbundes der domartige Abschnitt derart zurückgeformt, dass der Durchmesser der Fügeöffnung im Flachmaterial reduziert und dadurch deren Rand zur Erzeugung einer radialen Druckringspannung in den Nietbund angepresst wird, und zwar zur Erzielung einer zusätzlichen Verankerung. Dieses bekannte Verfahren erfordert aber ein relativ aufwendiges Werkzeug. Weiterhin hat sich gezeigt, dass mit diesem Verfahren entgegen den Erwartungen eine wesentliche Verbesserung der Verankerung, d.h. insbesondere auch der Ausreißfestigkeit des Funktionselementes im Werkstück bzw. im Flachmaterial nicht erreicht wird.

Die Druckschrift EP 1 500 461 A2 beschreibt ein Verfahren zur Einbringung eines Funktions- oder Fügeelements in ein Flachmaterial mit den Merkmalen des Oberbegriffs des Patentanspruchs 1. Insbesondere offenbart die Druckschrift das Einbringen und Vernieten einer Nietmutter in einem eine Fügeöffnung aufweisenden Flachmaterial. Dabei erstreckt sich ein Nietbund des Funktionselements durch die Fügeöffnung und wird oberseitig durch ein Presswerkzeug mit gekrümmt ausgebildeten Seitenumfangsflächen derart mit Druck beaufschlagt, dass eine radiale Aufweitung des Nietbundes erfolgt, wobei gleichzeitig das Flachmaterial im Bereich der Fügeöffnung zwischen dem verformten Nietbund einer unterseitigen Anlagefläche eingespannt wird.

Die Druckschrift DE 4410475 A1 offenbart das Einbringen und Vernieten eines Gewindebolzens in einem Flachmaterial, das im Bereich der Fügeöffnung einen domartigen Abschnitt aufweist.

Aufgabe der Erfindung ist es ein Verfahren aufzuzeigen, welches mit vereinfachten Mitteln durchführbar ist und dennoch ein Verankern von Funktionselementen in einem Flachmaterial mit hoher Ausreißfestigkeit ermöglicht. Zur Lösung dieser Aufgabe ist ein Verfahren entsprechend dem Patentanspruch 1 ausgebildet.

Nach der Erfindung erfolgt das Formen des den Nietbund aufnehmenden domartigen Abschnitts während des Füge- und Nietprozesses, und zwar derart, dass in einem ersten Verfahrensschritt durch Vorlochen die Fügeöffnung erzeugt wird, dass dann nach dem Fügen bzw. Einsetzen des Nietabschnittes des Funktions- oder Fügeelementes in die Fügeöffnung in einem weiteren Verfahrensschritt durch Vorformen oder Vorprägen der Nietbund teilweise geformt wird, sodass der vorverformte Nietbund über den Rand der Fügeöffnung vorsteht, dass dann in einem dritten Verfahrensschritt ein domartiger Abschnitt im Bereich der Fügeöffnung und des vorverformten Nietbundes gebildet, dass dann in einem vierten Verfahrensschritt durch Fertigprägen das endgültige Vernieten und Formen des Nietbundes erfolgen, d.h. der mit dem Vorformen des Nietbundes eingeleitete Nietprozess abgeschlossen wird. Die vorgenannten Verfahrensschritte erfolgen z.B. zeitlich nacheinander. Einzelne Verfahrensschritte können sich aber auch zumindest teilweise überschneiden. So ist es beispielsweise möglich, dass am Ende des Vorformens oder Vorprägens des Nietbundes bereits das Formen des domartigen Abschnitts erfolgt, zumindest aber eingeleitet wird und/oder dass das endgültige Vernieten und Formen des Nietbundes während des Formens des domartigen Abschnitts erfolgt oder zumindest noch während des Formens des domartigen Abschnitts eingeleitet wird.

Unter "Flachmaterial" ist im Sinne der Erfindung ein Flachmaterial aus einem bleibend verformbaren Werkstoff, insbesondere aus einem metallischen Werkstoff, beispielsweise aus Stahl zu verstehen, aber auch aus einem derartigen Flachmaterial gefertigte Werkstücke.

Unter "Fügeelement" oder "Funktionselement" sind im Sinne der Erfindung ganz allgemein in einem derartigen Flachmaterial oder Werkstück zu befestigende Elemente zu verstehen, insbesondere auch Verbindungselemente, wie z.B. auch Muttern, Bolzen usw.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung ein in eine Öffnung eines Werkstücks eingesetztes Funktions- oder Fügeelement in Form einer Mutter;
- Fig. 2: eine Darstellung wie Figur 1, jedoch nach dem Verbinden des Funktionselementes mit dem Werkstück;
- Fig. 3: in vereinfachter Darstellung eine Draufsicht auf die in der Figur 1 untere Seite des Fügeelementes;
- Fig. 4 - 6: Darstellungen ähnlich den Figuren 1 und 2;
- Fig. 7: eine Darstellung, ähnlich den Figuren 4 bzw. 6;
- Fig. 8 - 12: in Darstellungen ähnlich den Figuren 4 - 6 die Verfahrensschritte bei dem Verfahren gemäß der Erfindung.

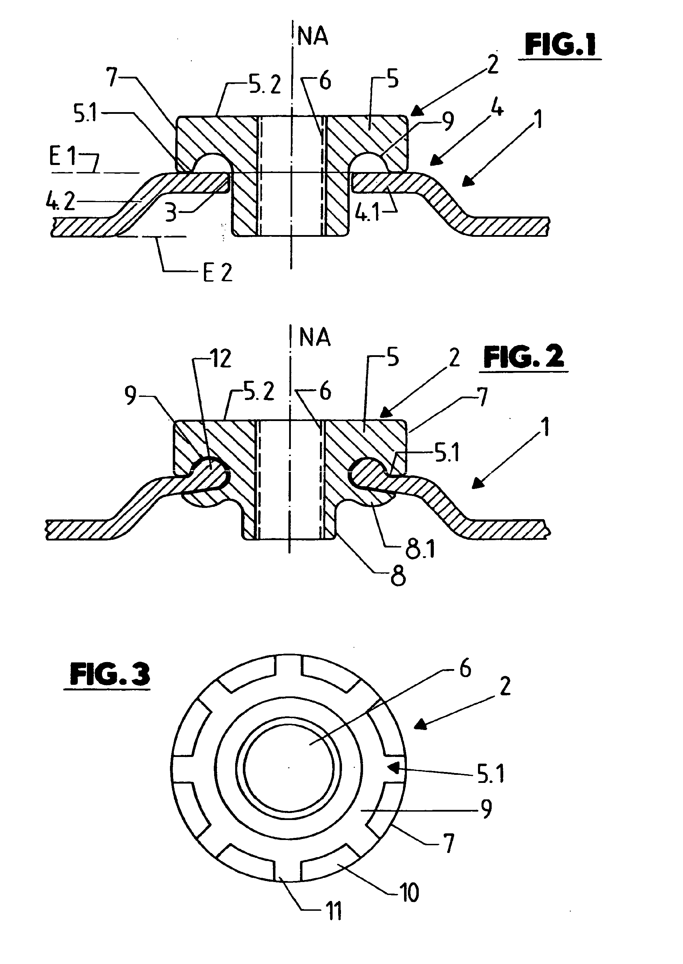

In den Figuren 1 und 2 ist 1 ein aus einem metallischen Flachmaterial, beispielsweise aus Stahlblech gefertigtes Werkstück, in welchem ein Verbindungselement,d.h. ein als Nietmutter ausgebildetes oder Fügeelement 2 durch Fügen und Schernieten verankert wird. Das Werkstück 1 ist mit einer Fügeöffnung 3 versehen, die sich an einer Basis 4.1 eines domartigen Abschnittes 4 befindet, der aus dem Flachmaterial des Werkstückes 1 durch bleibende Verformung mit einem die Basis 4.1 umgebenden Rand 4.2 hergestellt ist. Der domartige Abschnitt 4 ist bei der dargestellten Ausführungsform an seinem Rand 4.2 kegelstumpfförmig so ausgebildet, dass sich der entsprechende

Kegelwinkel zu der Ebene der Basis 4.1 hin öffnet. Mit dem Rand 4.2 geht der domartige Abschnitt 4 in das Werkstück 1 außerhalb des Abschnittes 4 über, und zwar derart, dass bei der dargestellten Ausführungsform die Ebene E1 der Basis 4.1 von der Ebene E2 des restlichen Werkstücks 1 beabstandet ist.

Die Nietmutter bzw. das Fügeelement 2, welches ebenfalls aus einem metallischen, durch Schernieten bleibend verformbaren Werkstoff, beispielsweise aus Stahl gefertigt ist, besteht im Wesentlichen aus einem Nietmutterkörper 5, der bei der dargestellten Ausführungsform im Wesentlichen kreiszylinderförmig bezogen auf eine Nietmutterachse NA ausgebildet ist und eine achsgleich mit der Achse NA angeordnete, beidendig offene Bohrung 6 mit Muttergewinde aufweist. Eine der beiden Stirnseiten des Körpers 5 bildet eine stirnseitige Anlagefläche 5.1, an der das Fügeelement 2 nach dem Vernieten bzw. Verbinden mit dem Werkstück 1 gegen die der Ebene E2 abgewandte Seite der Basis 4.1 anliegt. Über die Anlagefläche 5.1 steht bei noch nicht verarbeitetem Fügeelement 2 ein Nietabschnitt 8 vor, der hohlzylinderartig und die Achse NA konzentrisch umschließend ausgebildet ist, und zwar mit einem Außendurchmesser kleiner als der Außendurchmesser des Körpers 5. Die axiale Länge des Nietabschnittes 8 ist bei der dargestellten Ausführungsform kleiner als die axiale Länge des Körpers 5 bzw. der Abstand zwischen der Anlagefläche 5.1 und der gegenüberliegenden Stirnseite 5.2 des Körpers 5.

Zwischen dem Nietabschnitt 8 und dem äußeren Rand 7 ist in die Stirnseite bzw. Anlagefläche 5.1 eine Ringnut 9 eingebracht, die die Achse NA kreisringförmig umschließt. Die Ringnut 9 ist vom äußeren Rand 7 beabstandet, sodass zwischen der Ringnut 9 und dem äußeren Rand 7 eine Ringfläche 10 gebildet ist, an der die Anlagefläche 5.1 bei der dargestellten Ausführungsform nutenförmige Vertiefungen 11 aufweist, sodass an der Ringfläche 10 zur Drehmomentübertragung zwischen dem Werkstück und dem im Werkstück verankerten Fügeelement 2 eine Profilierung bestehend aus den Vertiefungen 11 und dazwischen gebildeten Vorsprüngen ausgebildet ist. Bei der dargestellten Ausführungsform reichen die Vertiefungen 11 in die Ringnut 9 hinein und erstrecken sich jeweils bis an den äußeren Rand 7. Selbstverständlich sind auch andere Ausführungen einer Profilierung an der Anlagefläche 5.1 möglich, beispielsweise auch in Form von die Ringnut 9 überbrückenden Stegen usw.

Zum Verbinden des Fügeelementes 2 mit dem Werkstück 1 wird das Fügeelement mit dem Nietabschnitt 8 voraus in die Fügeöffnung 3 eingesetzt, und zwar derart, dass der Nietabschnitt 8 mit seinem dem Körper 5 entfernt liegenden Enden in den Innenraum des domartigen Abschnittes 4 hineinreicht und die Anlagefläche 5.1 gegen die der Ebene E2 abgewandte Seite der Basis 5.1 anliegt. Die Fügeöffnung 3, die beispielsweise nach dem Formen des domartigen Abschnittes 4 in das Werkstück 1 bzw. Blech eingebracht wurde oder aber beim Formen des domartigen Abschnittes 4 in das Werkstück 1 bzw. Blech eingebracht wurde, besitzt einen Durchmesser, der gleich, vorzugsweise aber geringfügig größer ist als der Außendurchmesser des Nietabschnittes 8. Nach dem Einsetzen des Nietabschnittes 8 in die Fügeöffnung 3 erfolgt durch Schernieten das Verankern des Fügeelementes 2 im Werkstück 1. Bei diesem Schernieten wird nicht nur durch Abscheren und plastisches Verformen des Nietabschnittes 8 in einem Randbereich ein gegen die Innenseite der Basis 4.1 anliegender Nietbund 8.1 erzeugt, sondern gleichzeitig wird auch das Material des Werkstückes 1 im Bereich der Fügeöffnung 3 bleibend bzw. plastisch auch durch teilweises Fliesen dieses Materials so verformt, dass sich ein die Fügeöffnung 3 umschließender, in der Ringnut 9 aufgenommener und auch etwas über die Ebene der Oberseite der Basis 4 vorstehender ringförmiger Wulst 12 mit vergrößerter Materialdicke ausbildet, insbesondere auch mit einer Materialdicke, die größer ist als der Abstand, den der Verformte Nietbund 8.1 von der ihm gegenüberliegenden Ringfläche 10 aufweist, sodass sich über den innerhalb der Ringnut 9 gebildeten und zwischen dem verformten Nietbund 8.1 und der gegenüberliegenden Ringfläche 10 eingespannten Wulst 10 eine hohe Ausreißfestigkeit für das im Werkstück verankerte Fügeelement 2 ergibt, und zwar nicht nur durch die im Bereich des Wulstes 12 erzeugte Verknüpfung, sondern auch durch die durch den Wulst 12 erzeugte zusätzliche Verstärkung des Randbereichs der Fügeöffnung 3.

Nach dem Schernieten ist der Abschnitt 8 mit einem reduzierten Durchmesser weiterhin in dem Innenraum des domartigen Abschnittes 4 aufgenommen, und zwar derart, dass weder der verbliebene Nietabschnitt 8, noch der durch Schernieten gebildete Nietbund 8.1 über die Unterseite des Werkstückes 1 vorstehen.

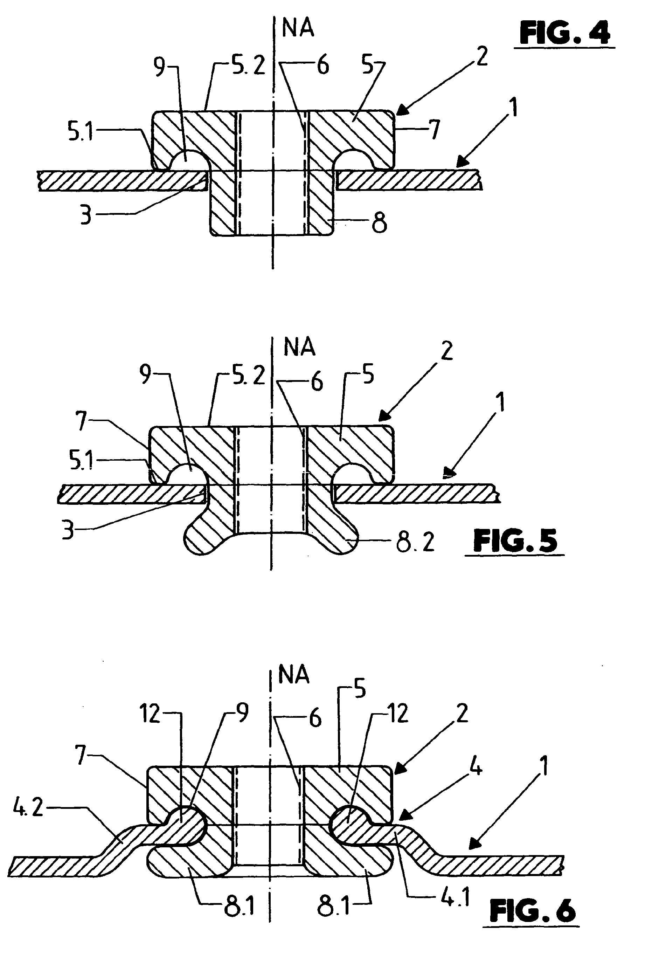

Die Figuren 4 - 6 zeigen ein Verfahren, bei dem aber der domartige Abschnitt 4 erst nach dem Einsetzen des Fügeelementes 2 in die Fügeöffnung 3 und während des Nietprozesses erzeugt wird, allerdings wiederum in der Form, dass sich beim Nieten der in der Ringnut 9 aufgenommene und am Umfang bzw. Rand des Fügeelementes 2 bzw. des Fügeelementkörpers 5 zwischen dem verformten Nietbund 8.1 und der gegenüberliegenden Ringfläche 10 eingeschnürte, die Fügeöffnung 3 umgebende Wulst 12 ausbildet.

Bei diesem in den Figuren 4 - 6 dargestellten Verfahren erfolgt nach dem Einsetzen des Fügeelementes 2 in die Fügeöffnung 3 zunächst das Formen eines vorgeformten Nietbundes 8.2 aus dem Nietabschnitt 8 (Figur 5) bei noch ebenem Werkstück 1. In einem darauf folgenden Verfahrensschritt wird dann ein dem domartigen Abschnitt 4 entsprechender domartiger Abschnitt erzeugt. Der Füge- und Nietprozess wird mit dem endgültigen Vernieten bzw. mit dem endgültigen Formen des Nietbundes 8.1 abgeschlossen. Hierbei ist es auch möglich, dass das Formen des domartigen Abschnitts und das endgültige Vernieten in einem Verfahrensschritt erfolgen, z.B. zeitlich versetzt oder zumindest teilweise zeitlich überlappend. Weiterhin besteht auch die Möglichkeit, dass das Formen des vorgeformten Nietbundes 8.2 und das Formen des domartigen Abschnitts 4 zumindest teilweise zeitlich überlappend erfolgen.

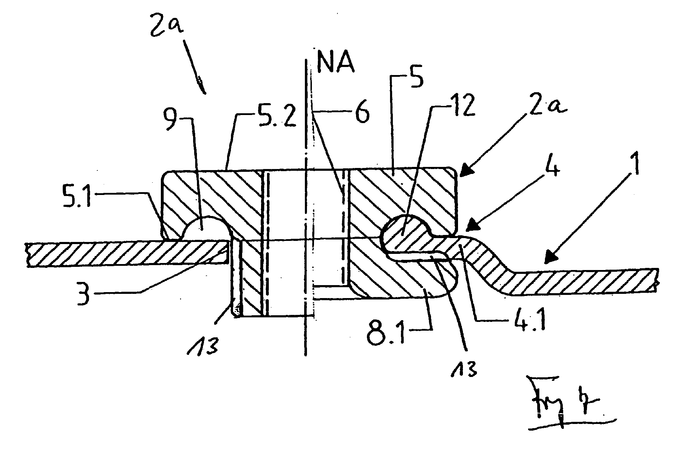

Die Figur 7 zeigt links ein Fügeelement 2a vor und rechts nach dem Verbinden mit dem Werkstück 1. Das Fügeelement 2a unterscheidet sich von dem Fügeelement 2 dadurch, dass es an der Außenfläche des Abschnitts 8 bei 13 profiliert ist, d.h. beispielsweise mit parallel zur Achse NA verlaufenden Rippen oder Vorsprüngen versehen ist, die nach dem endgültigen Vernieten in das Material des Bauteils 1 eingedrückt sind, insbesondere auch im Bereich des Nietbundes 8.1 und dadurch das vernietete Fügeelement 2a sehr wirksam gegen Verdrehen sichern. Zur weiteren Verbesserung der Drehmomentaufnahme bzw. der Verdrehungssicherung des im Werkstück 1 verankerten Fügeelementes 2 bzw. 2a besteht weiterhin auch die Möglichkeit, die Ringnut 9 zu profilieren, beispielsweise durch quer zu dieser Ringnut erstreckende Stege oder durch Unterbrechungen der Ringnut und/oder die Ringnut 9 derartig auszubilden, dass sie einen von der Kreisform abweichenden Verlauf besitzt, beispielsweise einen polygonartigen Verlauf an wenigstens einem Rand, beispielsweise am inneren oder äußeren Rand oder aber an beiden Rändern.

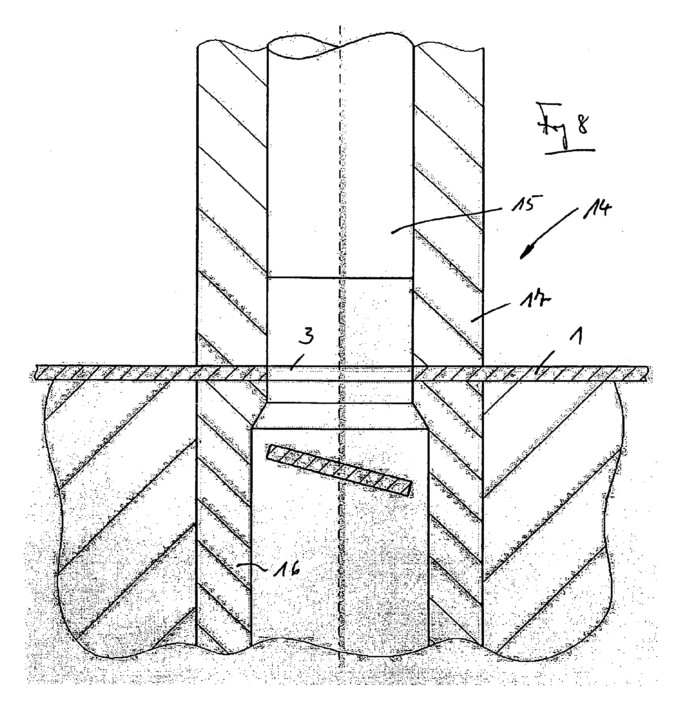

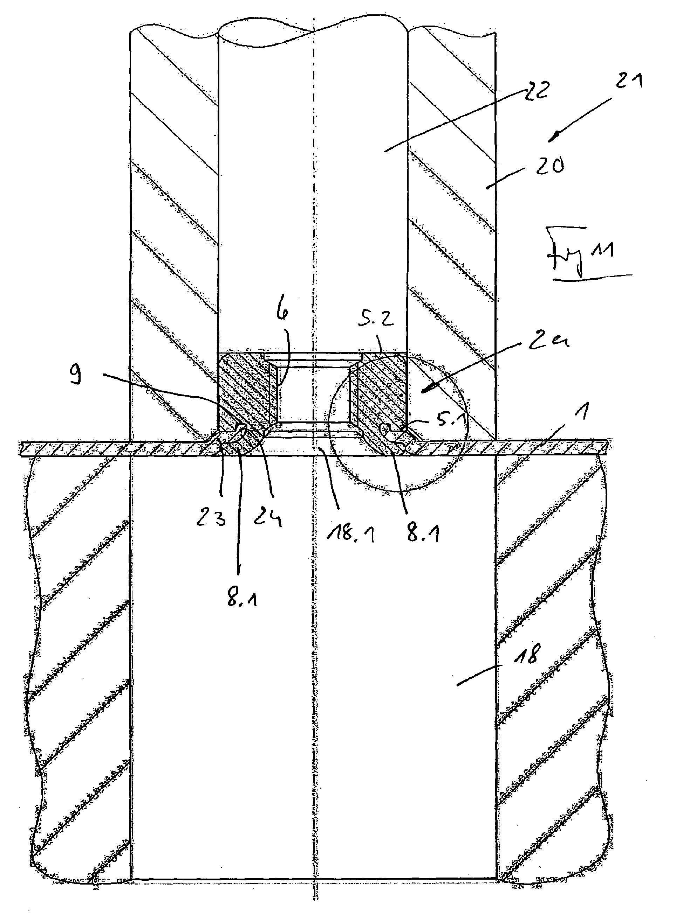

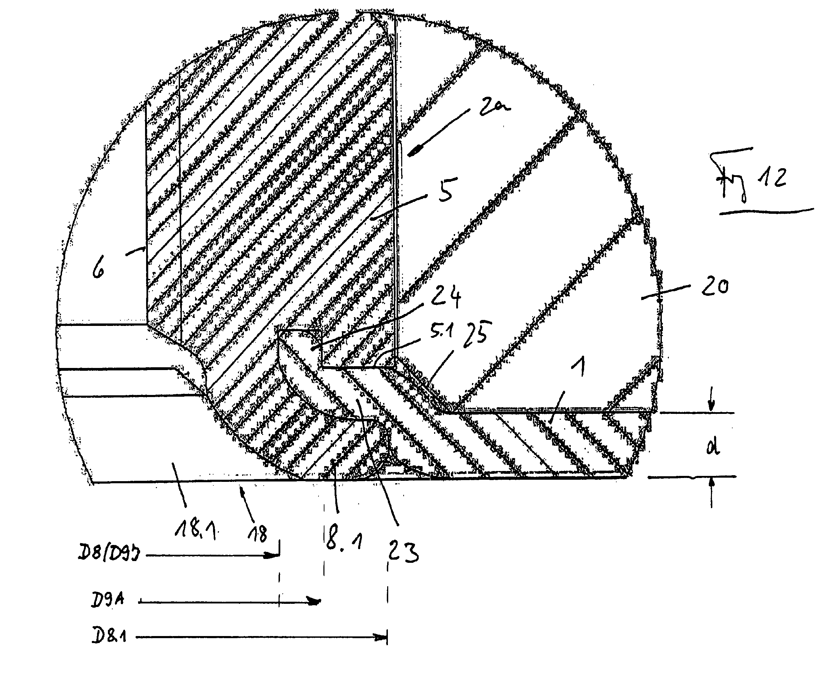

In den Figuren 8 - 12 sind die verschiedenen Verfahrensschritte einer weiteren Ausführungsform des erfindungsgemäßen Verfahrens zum Anbringen des als Nietmutter ausgebildeten Funktions- oder Fügeelementes 2a in dem aus dem Flachmaterial (Stahlblech) bestehenden Werkstück 1 dargestellt. Die Figur 8 zeigt in vereinfachter Darstellung des Einbringen der Fügeöffnung 3 in das Werkstück 3 mit Hilfe eines Stanzwerkzeuges 14, welches im Wesentlichen aus einem Schneid- oder Stanzstempel 15, aus einer Matrize 16 und einem den Stempel 15 hülsenartig umschließenden Niederhalter 17 besteht, mit das Werkstück 1 gegen die Matrize 16 angepresst ist.

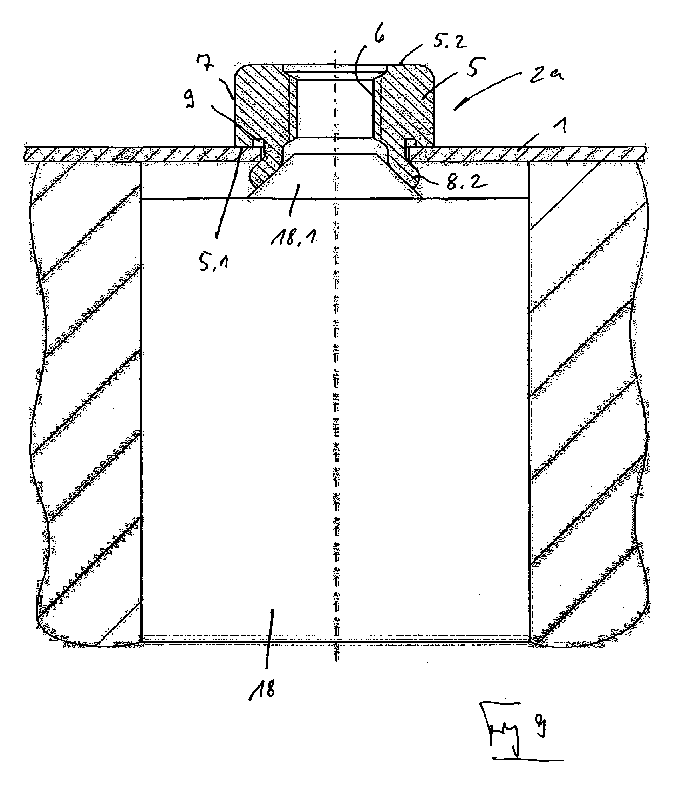

Nach dem Einbringen der Fügeöffnung 3 erfolgt das Einsetzen des Fügeelementes 2a mit seinem noch nicht verformten Nietbund oder Abschnitt 8 in die Fügeöffnung 3, so dass der Rand der Fügeöffnung gegen die Anlage- oder Stirnfläche 5.1 des Fügeelementkörpers 5 anliegt und der Abschnitt 8 über die Unterseite des Werkstückes 1 vorsteht. In einem anschließenden Verfahrensschritt erfolgt entsprechend der Figur 9 unter Verwendung eines stempelartigen Werkzeugteils 18, welches mit einem kegelartigen Abschnitt 18.1 auf den Nietabschnitt 8 einwirkt ein teilweises Verformen des Abschnittes 8 in den vorverformten Nietbund 8.2, und zwar derart, dass der vorgeformte Nietbund 8.2 an seinem unteren Rand einen Durchmesser aufweist, der bereits deutlich größer ist als der Durchmesser der Fügeöffnung 3. Das Werkstück 1 ist nach der Bildung des vorverformten Nietbundes 8.2 im Bereich der Fügeöffnung 3 noch eben oder im Wesentlichen eben ausgebildet.

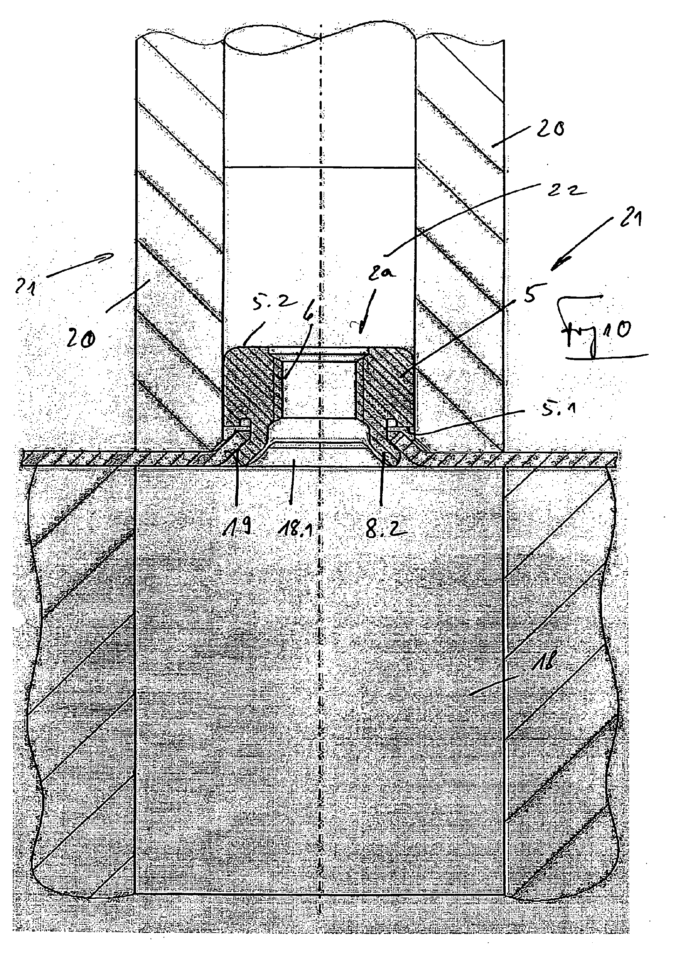

In einem anschließenden Verfahrensschritt erfolgt dann entsprechend der Figur 10 ein Auftüllen des Werkstückes im Randbereich der Fügeöffnung 3, d.h. ein Verformen des Werkstückes 1 im Randbereich der Fügeöffnung 3 derart, dass sich unter Aufweitung der Fügeöffnung 3 ein kegelringartiger Randbereich 19 ergibt, der über die dem Fügeelementkörper 5 zugewandte Oberseite des Werkstückes 1 vorsteht. Dieser kegelringartige Randbereich 19 wird dadurch gebildet, dass das Werkstück 1 an seiner Oberseite in einem den Fügeelementkörper 5 umgebenden ringförmigen Bereich durch eine martritzen- oder niederhalterartiges Werkzeugteil 20 eines dreiteiligen Werkzeugs 21 und das Fügeleement an seiner dem Werkstück 1 abgewandten oberen Stirnfläche 5.2 durch einen Stempel 22 dieses Werkzeugs 21 abgestützt sind und außerdem das untere Werkzeugteil 18 dieses Werkzeugs 21 auf den Stempel 22 bzw. das Werkzeugteil 20 zu bewegt wird. Durch den sich gegen den Abschnitt 18.1 abstützenden vorgeformten Nietbund 8.2 erfolgt dabei das Formen des kegelringartigen Randbereichs 19.

Insbesondere durch entsprechende Ausbildung des Werkzeugabschnittes 18.1 wird der Nietabschnitt 8 in den vorverformten Nietbund 8.2 so geformt, dass der vorverformte Nietbund 8.2 in einem an den Fügeelementkörper 5 unmittelbar anschließenden Teilabschnitt weiterhin kreisringförmig oder im Wesentlichen kreisringförmig ist und erst in einem daran anschließenden Teilabschnitt kegelringförmig mit einem sich nach unten hin erweiternden Querschnitt ausgebildet ist.

Das Formen des kegelringförmigen Randbereichs 19 ist abgeschlossen, sobald das stempelartige Werkzeugteil 18 mit seiner oberen, den Abschnitt 18.1 ringartig umschließenden ebenen Werkzeugfläche gegen die Unterseite des Werkstückes 1 anliegt und dieses somit zwischen dem Werkzeugteil 18 und dem Werkzeugteil 20 in einem dem Fügeelementkörper 5 umgebenden Randbereich fest eingespannt ist. Wie die Figur 10 zeigt, ist in diesem Zustand der Randbereich 19 so geformt, dass der Rand der Fügeöffnung 3, die einen gegenüber dem ursprünglichen Durchmesser etwas vergrößerten Durchmesser aufweist, sowohl von der Stirnfläche 5.1 als auch von der Umfangsfläche des nicht verformten Bereichs des Nietabschnittes 8 beabstandet.

In einem weiteren Verfahrensschritt erfolgt dann das endgültige Vernieten bzw. das Formen des endgültigen Nietbundes 8.1, und zwar dadurch, dass bei weiterhin gegen das Werkzeugteil 18 abgestützten und zwischen diesem Werkzeug und dem Werkzeugteil 20 eingespanntem Werkstück 1 der Stempel 22 auf das Werkzeugteil 18 zu bewegt wird, wodurch das Verformen des vorgeformten Nietbundes 8.2 in den endgültigen Nietbund 8.1 sowie auch ein bleibendes bzw. plastisches Verformen des Materials des Werkstückes 1 im Randbereich der Fügeöffnung 3 derart erfolgen, dass das Material des Werkstückes 1 im Randbereich der Fügeöffnung 3 einerseits zwischen dem an der Unterseite des Werkstückes 1 geformten Nietbund 8.1 und der diesem Nietbund gegenüberliegenden ringförmigen Anlage- oder Stirnfläche eingespannt ist, andererseits in unmittelbarer Randnähe der Fügeöffnung 3 durch Fließen auch in die Ringnut 9, die an der Anlage- und Stirnfläche 5.1 des Fügeelementes 2a vorgesehen ist, hineinverformt ist. Das Werkstück 1 bildet somit an Randbereich der ursprünglichen Fügeöffnung 3, der zumindest teilweise im vernieteten Fügeelement 2a aufgenommen ist, einen in etwa domartigen, über die Ebene der Oberseite des Werkstückes 1 vorstehenden Abschnitt 23, der innenliegend und an seiner der Unterseite des Werkstückes 1 abgewandten Oberseite mit einem vorstehenden kreisring- oder kreiszylinderförmigen, in der Ringnut 9 aufgenommenen Abschnitt 24 ausgebildet ist. Durch den in der Ringnut 9 aufgenommenen Abschnitt 24 und durch den zwischen der Stirnfläche 5.1 und dem Nietbund 8.1 eingespannten Bereich des domartigen Abschnittes 23 ergibt sich die angestrebte hochfeste Verbindung zwischen dem Fügeelement 2a und dem Werkstück 1. Da das endgültige Formen des Nietbundes 8.1 insbesondere auch unter Mitwirkung der ebenen, den Werkzeugabschnitt 18.1 umschließenden Stirnfläche des Werkzeugteils 18 erfolgt, steht der verformte Nietbund 8.1 nicht über die Unterseite des Werkstückes 1 vor, sondern befindet sich in einer Ebene mit dieser Unterseite.

Um den die Fügeöffnung 3 umgebenden Randbereich in den domartigen Abschnitt 23 zu verformen, ist das Werkzeugteil 20 an seinem innen liegenden Randbereich bei 20.1 kegelförmig abgeschrägt.

Um nach dem endgültigen Vernieten einen verformten Nietbund 8.1 zu erreichen, dessen Außendurchmesser D8.1 gleich oder etwa gleich dem Außendurchmesser des Fügeelementkörpers 5 ist, und um weiterhin zu erreichen, dass zwischen diesem endgültig verformten Nietbund 8.1 und der gegenüberliegenden Anlage- oder Stirnfläche 5.1 des Fügeelementes 2 bzw. 2a oder des Fügeelementkörpers 5 der die Fügeöffnung umgebende domartige Abschnitt 23 fest eingespannt ist und zugleich auch in der Ringnut 9 der dort eingesperrte ringförmige Abschnitt 24 gebildet ist, ist das Fügeelement 2 bzw. 2a wie folgt ausgebildet:
➢ Das Fügeelement 2 bzw. 2a weist im Bereich des Fügeabschnittes 8 eine Formgebung in der Weise auf, dass der Außendurchmesser der Ringnut 9, d.h. der Durchmesser D9A des außen liegenden Randes der Ringnut 9 größer oder höchstens gleich dem Durchmesser D8.1 des verformten Nietbundes 8.1 ist, und zwar zzgl. der Dicke d (Blechdicke) des Werkstücks 1 oder z.B. zzgl. der doppelten Dicke d.
➢ Weiterhin gilt, dass der Durchmesser D8 des nicht verformten Nietbundes oder Abschnitts 8 kleiner oder gleich dem Innendurchmesser der Ringnut 9, d.h. dem Durchmesser D9I des innen liegenden Randes der Ringnut 9 ist, auf jeden Fall aber kleiner ist als der Durchmesser D9A dieser Ringnut.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

So wurde vorstehend im Zusammenhang mit den Figuren 4 - 6 davon ausgegangen, dass der Nietabschnitt 8 vollständig in den Nietbund 8.1 verformt wird. Selbstverständlich kann auch bei dieser Ausführungsform ein Schernieten erfolgen.

Weiterhin wurde vorstehend im Zusammenhang mit den Figuren 8 - 12 davon ausgegangen, dass das untere Werkzeugteil 18 beweglich ist. In der Praxis ist dieses Werkzeugteil fest. Bewegt werden sowohl bei der Bildung des vorgeformten Nietbundes 8.2, als auch beim endgültigen Vernieten bzw. beim Formen des endgültigen Nietbundes 8.1 die Werkzeugteile 20 und 22 sowie das das Werkzeugteil 18 umgebende Werkzeugteil 16.1 zusammen mit dem Flachmaterial 1.

Weiterhin wurde vorstehend davon ausgegangen, dass das Fügeelement 2 eine Nietmutter ist. Selbstverständlich sind auch andere Ausführungen des Fügeelementes denkbar, beispielsweise in Form eines andersartigen Verbindungselementes, wie z.B. eines Bozens, auch Gewindebolzens usw.

So wurde vorstehend im Zusammenhang mit der Figur 7 die Verwendung des Fügeelementes 2a mit der Profilierung 13 bei einem Verfahren dargestellt, bei dem der Abschnitt 8 komplett in den Nietbund 8.1 verformt wird. Selbstverständlich kann das Fügeelement auch bei einem Verfahren verwendet werden, bei dem der Nietbund durch Schernieten erzeugt wird.

Auch bei dieser Ausführungsform kann das Fügeelement 2a wiederum zusätzlich zu der Ringnut mit die Drehfestigkeit bzw. die Drehmomentaufnahme verbessernden Vertiefungen 11 und/oder Profilierungen 13 versehen sein. Weiterhin besteht auch bei dieser Ausführungsform die Möglichkeit, die Ringnut 9 so auszubilden, dass sie ein- oder mehrmals durch radial zur Achse NA des Fügeelementes 2a verlaufende Stege unterbrochen ist.

### Bezugszeichenliste

- 1: Werkstück
- 2, 2a: Fügeelement
- 3: Fügeöffnung
- 4: domartiger Abschnitt
- 4.1: Basis
- 4.3: Randbereich
- 5: Fügeelementkörper
- 5.1: Anlage- oder Stirnfläche
- 5.2: Stirnfläche
- 6: Gewindebohrung
- 7: Umfangsfläche bzw. Umfangsrand
- 8: Abschnitt
- 8.1: Nietbund
- 8.2: vorverformter Nietbund
- 9: Ringnut
- 10: Ringfläche
- 11: Vertiefung
- 12: Wulst
- 13: Profilierung
- 14: Stanzwerkzeug
- 15: Stanz- oder Schneidstempel
- 16: Matrize
- 16.1: Werkzeugteil
- 17: Niederhalter
- 18: Werkzeugteil
- 18.1: kegelartiger Werkzeugabschnitt
- 19: aufgetüllter Randbereich
- 20: Werkzeugteil
- 21: Werkzeug
- 22: Stempel
- 23: domartiger Abschnitt
- 24: ringförmiger Abschnitt
- 25: Abschrägung
- d: Dicke des Werkstücks
- D8: Durchmesser des Abschnitts 8
- D8.1: Durchmesser des verformten Nietbundes 8.1
- D9A: Außendurchmesser der Ringnut 9
- D9I: Innendurchmesser der Ringnut 9
- E1, E2: Ebene
- NA: Achse des Fügeelementes

## Patentansprüche

1. Verfahren zum Anbringen eines Fügeelementes (2, 2a) an einem plastisch verformbaren Flachmaterial (1), unter Verwendung eines Werkzeugs (21) mit einem axial bewegbaren und stirnseitig einen kegelartigen Abschnitt (18.1) aufweisenden stempelartigen ersten Werkzeugteil (18) an einer Seite des Flachmaterials (1) und mit einem das Fügeelement (2, 2a) mit seinem Fügeelementkörper (5) aufnehmenden matritzenartigen zweiten Werkzeugteil (20) an der anderen Seite des Flachmaterials (1),
wobei das Funktionselement (2, 2a) an einer eine Ringnut (9) aufweisenden Anlagefläche (5.1) seines Fügeelementkörpers (5) einen über diese Fläche weg stehenden vernietbaren Nietabschnitt (8) aufweist,
wobei das Anbringen des Fügeelementes (2, 2a) am Flachmaterial (1) in einem Füge- und Nietprozess durch plastisches Verformen des Nietabschnitts (8) in einen eine Fügeöffnung (3) hintergreifenden Nietbund (8.1) derart erfolgt, dass das Flachmaterial (1) in einem die Fügeöffnung (3) umgebenden Randbereich (19) zwischen dem Nietbund (8.1) und der Anlagefläche (5.1) des Funktionselementes (2, 2a) eingespannt aufgenommen ist und während des Nietprozess ein domartiger, eine Vertiefung zur Aufnahme des Nietbundes (8.1) bildender Abschnitt (4) durch kegelringartiges Verformen des Flachmaterials (1) in einem die Fügeöffnung (3) umgebenden Randbereich (19) erzeugt wird, und
wobei das Verfahren folgende Verfahrensschritte aufweist:
(I) Einsetzen des Nietabschnitts (8) mit seinem noch nicht verformten Nietabschnitt (8.1) in die Fügeöffnung (3) in einem ersten Verfahrensschritt,
(II) Überführen des Nietbundes (8.1) mit dem kegelartigen Abschnitt (18,1) des ersten Werkzeugteils (18) unter Aufweitung der Fügeöffnung (3) in einen vorverformten Nietbund (8.2) in einem zweiten Verfahrensschritt, wobei das Flachmaterial (1) im Bereich der Fügeöffnung (3) noch eben ausgebildet ist,
(III) kegelringartiges Verformen des Flachmaterials (1) in einem die Fügeöffnung (3) umgebenden Randbereich (19) nach dem Formen des vorverformten Nietbundes (8.2) in einem dritten Verfahrensschritt, und zwar unter Mitwirkung des sich gegen den kegelartigen Abschnitt (18.1) des ersten Werkzeugteils (18) abstützenden vorverformten Nietbundes (8.2), und
(IV) endgültiges Vernieten des Funktionselementes (2, 2a) am Flachmaterial (1) mit dem Werkzeug (21) bei zwischen dem ersten und dem zweiten Werkzeugteil (18, 20) eingespanntem Flachmaterial in einem vierten Verfahrensschritt derart, dass das Flachmaterial (1) im Randbereich (19) der Fügeöffnung (3) zwischen dem Nietbund (8.1) und der diesem Nietbund (8.1) gegenüberliegenden ringförmigen Anlage- oder Stirnfläche (5.1) eingespannt ist und in unmittelbarer Randnähe der Fügeöffnung (3) durch Fließen auch in die Ringnut (9) hineinverformt ist;
**dadurch gekennzeichnet,**
**dass** das Fügeelementes (2, 2a) in dem ersten Verfahrensschritt in die Fügeöffnung (3) so eingesetzt wird, dass es mit seiner Anlagefläche (5.1) gegen die obere Stirnseite des Flachmaterials (1) anliegt und der Nietabschnitt über die untere Stirnseite des Flachmaterials (1) vorsteht,
**dass** bei Ausbildung des Werkzeugs (21) mit einem Stempel (22), der von den matritzenartigen zweiten Werkzeugteil (20) umschlossen und relativ zu diesem axial bewegbar ist, im dritten Verfahrensschritt das an seiner oberen, dem Flachmaterial (1)abgewandten Stirnfläche sich gegen den Stempel (22) abstützende Fügeelement (2, 2a) durch das sich auf das matritzenartigen zweite Werkzeugteil (20) zu bewegende erste Werkzeugteil (18) und durch axiale Relativbewegung zwischen dem Stempel (22) und dem matritzenartigen zweiten Werkzeugteil (20) der Nietbund (8,2) so verformt wird, dass der vorverformte Nietbund (8.2) in einem an den Fügeelementkörper (5) unmittelbar anschließenden Teilabschnitt kreisringförmig oder im Wesentlichen kreisringförmig ist und erst in einem daran anschließenden Teilabschnitt kegelringförmig mit einem sich nach unten hin erweiternden Querschnitt ausgebildet ist, und
**dass** im vierten Verfahrensschritt der gegen den Fügeelemtkörper (5) anliegende Stempel (22) auf das erste Werkzeugteil (18) zu bewegt wird, wodurch das Verformen des vorgeformten Nietbundes (8.2) in den endgültigen Nietbund (8.1) und das endgültiges Vernieten des Funktionselementes (2, 2a) am Flachmaterial (1) erfolgen.

2. Verfahren nach Anspruch 1, **dadurch gekennzeichnet, dass** sich die einzelnen Verfahrensschritte zumindest teilweise überschneiden.

3. Verfahren nach Anspruch 2, **dadurch gekennzeichnet, dass** das endgültige Vernieten und Formen des Nietbundes (8.1) während des Formens des domartigen Abschnitts (4) erfolgt oder zumindest noch während des Formens des domartigen Abschnitts (4) eingeleitet wird.

4. Verfahren nach einem der vorhergehenden Ansprüche, **dadurch gekennzeichnet**, der Nietbund (8.1) durch Verformen des gesamten oder im Wesentlichen des gesamten Nietabschnitts (8.1) und/oder durch Schernieten erzeugt wird.

5. Verfahren nach einem der vorhergehenden Ansprüche, **dadurch gekennzeichnet, dass** der Nietbund (8.1) derart geformt wird, dass das Flachmaterial in dem die Fügeöffnung (3) umgebenden Randbereich (19) zwischen dem Nietbund (8.1) und der Anlagefläche (5.1) des Funktionselementes (2, 2a) eingespannt aufgenommen ist, und zwar unter Ausbildung eines Einspannbereich, der im Vergleich zu wenigstens einem der Achse der Fügeöffnung (3) näher liegenden und ebenfalls zwischen der Anlagefläche und dem verformten Nietbund (8.1) angeordneten Bereich eine reduzierten Materialdicke aufweist.

6. Verfahren nach einem der vorhergehenden Ansprüche, **dadurch gekennzeichnet, dass** das Fügeelement (2, 2a) eine Nietmutter ist.

7. Verfahren nach einem der vorhergehenden Ansprüche, **dadurch gekennzeichnet, dass** das Funktions- oder Fügeelement an der Außenfläche des Nietabschnitts (8) profiliert ist.

8. Verfahren nach einem der vorhergehenden Ansprüche, **dadurch gekennzeichnet, dass** das Vernieten oder Formen des endgültigen Nietbundes (8.1) so erfolgt, dass der die Fügeöffnung umgebender Randbereich (19) in einen zwischen dem Nietbund (8.1) und einer diesem gegenüberliegenden Fläche (5.1) des Fügeelementes (2a) eingespannten domartigen Abschnitt (23) sowie auch in einen innenliegenden, sich vom domartigen Abschnitt (23) in Richtung der Achse der Fügeöffnung (3) oder des Fügeelementes (2a) erstreckenden ringförmigen Abschnitt (24) verformt wird.

9. Verfahren nach einem der vorhergehenden Ansprüche, **dadurch gekennzeichnet, dass** zumindest das Formen des die Fügeöffnung (3) umgebenden kegelringförmigen Randbereichs (19) und das endgültige Vernieten vorzugsweise in ein und demselben Werkzeug erfolgen.

## Claims

1. Method for attaching a joint element (2, 2a) to a plastically deformable planar material (1), by using a tool (21) with an axially movable ram-type first tool part (18) which has a conical-shaped section (18.1) at the end, on one side of the planar material (1), and with a matrix-type second tool part (20) receiving the joint element (2, 2a) with its joint element body (5), on the other side of the planar material (1), wherein the function element (2, 2a) has on a contact bearing face (5.1) of its joint element body (5) which has a ring groove (9) a rivetable rivet section (8) which protrudes beyond this surface, wherein attaching the joint element (2, 2a) on the planar material (1) is carried out in a joining and riveting process by plastically deforming the rivet section (8) into a rivet collar (8.1) which engages behind a joint opening (3) so that the planar material (1) is housed clamped in a peripheral region (19) surrounding the joint opening (3) between the rivet collar (8.1) and the contact bearing face (5.1) of the function element (2, 2a) and during the riveting process a domed section (4) forming an indentation for receiving the rivet collar (8.1) is created by deforming the planar material (1) in the shape of a conical ring in a peripheral region (19) which surrounds the joint opening (3), and wherein the method has the follow method steps:
(I) inserting the rivet section (8) with its not yet deformed rivet section (8.1) into the joint opening (3) in a first method step,
(II) changing the rivet collar (8.1) with the conical section (18.1) of the first tool part (18) by expanding the joint opening (3) into a pre-formed rivet collar (8.2) in a second method step, wherein the flat material (1) is still formed flat in the region of the joint opening (3)
(III) deforming the planar material (1) into a conical ring in a peripheral region (19) surrounding the joint opening (3) after forming the pre-formed rivet collar (8.2) in a third method step, namely with the interaction of the pre-formed rivet collar (8.2) which is supported against the conical section (18.1) of the first tool part (18), and
(IV) finally riveting the function element (2, 2a) on the planar material (1) with the tool (21) with the planar material clamped between the first and the second tool parts (18, 20) in a fourth method step, so that the planar material (1) is clamped in the peripheral region (19) of the joint opening (3) between the rivet collar (8.1) and the ring-shaped contact bearing or end face (5.1) which is opposite this rivet collar (8.1), and is deformed immediately adjoining the joint opening (3) by flowing into the ring groove (9),
**characterised in that** the joint element (2, 2a) is inserted in the first method step into the joint opening (3) so that it bears with its contact bearing face (5.1) against the upper end side of the planar material (1), and the rivet section projects beyond the lower end side of the planar material (1), that with the design of the tool (21) with a ram (22), which is surrounded by the matrix-type second tool part (20) and is movably axially relative thereto, in the third method step the joint element (2, 2a), which on its upper end face remote from the planar material (1) is supported against the ram (22), is deformed by the first tool part (18), which is to be moved onto the matrix-type second tool part (20), and by axial relative movement between the ram (22) and the matrix-type second tool part (20) the rivet collar (8.2) is deformed so that the pre-deformed rivet collar (8.2) in a partial portion directly adjoining the joint element body (5) is circular-ring shaped or substantially circular ring-shaped and only in a partial portion adjoining same is formed conical ring shaped with a downwardly expanding cross-section, and that in the fourth method step the ram (22) which adjoins against the joint element body (5) is moved up to the first tool part (18) whereby the pre-formed rivet collar (8.2) is deformed into the final rivet collar (8.1) and the function element (2, 2a) is finally riveted on the planar material (1).

2. Method according to claim 1 **characterised in that** the individual method steps at least partly overlap.

3. Method according to claim 2 **characterised in that** the final riveting and shaping of the rivet collar (8.1) is carried out during shaping of the domed section (4) or is initiated at least still during the shaping of the domed section (4).

4. Method according to one of the preceding claims **characterised in that** the rivet collar (8.1) is created by deforming the entire or substantially the entire rivet section (8.1) and/or by shear riveting.

5. Method according to one of the preceding claims **characterised in that** the rivet collar (8.1) is shaped so that the planar material is received in the peripheral region (19) surrounding the joint opening (3) clamped between the rivet collar (8.1) and the contact bearing face (5.1) of the function element (2, 2a), namely by forming a clamping region which has reduced material thickness compared with at least a region lying closer to the axis of the joint opening (3) and likewise arranged between the contact bearing face and the deformed rivet collar (8.1).

6. Method according to one of the preceding claims **characterised in that** the joint element (2, 2a) is a rivet nut.

7. Method according to one of the preceding claims **characterised in that** the function or joint element is profiled on the outside surface of the rivet section (8).

8. Method according to one of the preceding claims **characterised in that** the riveting or forming of the final rivet collar (8.1) is carried out so that the peripheral region (19) surrounding the joint opening is deformed into a domed section (23) which is clamped between the rivet collar (8.1) and a surface (5.1) of the joint element (2a) opposite this, as well as also into an inner ring-shaped section (24) which extends from the domed section (23) in the direction of the axis of the joint opening (3) or the joint element (2a).

9. Method according to one of the preceding claims **characterised in that** at least the forming of the conical ring-shaped peripheral region (19) surrounding the joint opening (3), and the final riveting are preferably carried out in one and the same tool.

## Revendications

1. Procédé destiné à fixer un élément d'assemblage sur un matériau plat (1) plastiquement déformable, en utilisant un outil (21) avec un première partie d'outil (18) de type poinçon déplaçable axialement présentant sur une face frontale une section conique (18.1), sur un côté du matériau plat (1) et avec une seconde partie d'outil (20) de type à matrice logeant l'élément d'assemblage (2, 2a) avec son corps d'élément d'assemblage (5) sur l'autre côté du matériau plat (1),
auquel cas l'élément fonctionnel (2, 2a) présente sur une surface d'appui (5.1) de son corps d'élément d'assemblage (5) une partie à riveter (8) pouvant être rivetée faisant saillie hors de cette surface ; la surface d'appui (5.1) présentant une rainure annulaire (9) ;
auquel cas la fixation de l'élément d'assemblage (2, 2a) sur le matériau plat (1) est réalisée dans un processus de rivetage et d'assemblage par déformation plastique de la partie à riveter (8) dans un épaulement riveté (8.1) en venant en prise par l'arrière avec l'orifice d'assemblage (3) de sorte que le matériau plat (1) est logé serré dans une partie périphérique (19) entourant l'orifice d'assemblage (3), entre l'épaulement riveté (8.1) et la surface d'appui (5.1) de l'élément fonctionnel (2, 2a) et pendant le processus de rivetage l'on produit une section (4) en forme de dôme, formant un évidement destiné à loger l'épaulement riveté (8.1), par déformation de type à joint torique du matériau plat (1) dans une partie périphérique (19) entourant l'orifice d'assemblage (3), et
auquel cas le procédé comporte les étapes suivantes :
(I) introduction de la partie à riveter (8) avec son épaulement riveté (8.1) pas encore déformé dans l'ouverture d'assemblage (3) dans une première étape de procédé,
(II) transformation de l'épaulement riveté (8.1) avec la partie conique (18.1) de la première partie d'outil (18) par élargissement de l'ouverture d'assemblage (3) dans un épaulement riveté (8.2) pré-déformé dans une deuxième étape de procédé, auquel cas le matériau plat (1) est formé de sorte à être plat dans le secteur de l'ouverture d'assemblage (3),
(III) déformation de type à joint torique du matériau plat (1) dans une partie périphérique (19) entourant l'orifice d'assemblage (3) après le formage de l'épaulement riveté (8.2) pré-déformé dans une troisième étape de procédé, et ce sous l'action conjointe de l'épaulement riveté (8.2) pré-déformé s'appuyant contre la section conique (18.1) de la première partie d'outil (18), et
(IV) rivetage définitif de l'élément fonctionnel (2, 2a) sur le matériau plat (1) avec l'outil (21) lors du matériau plat serré entre la première et la seconde partie d'outil (18, 20) dans une quatrième étape de procédé, de telle sorte que le matériau plat (1), dans la partie périphérique (19) de l'ouverture d'assemblage (3), est serré entre l'épaulement riveté (8.1) et la surface d'appui ou surface frontale (5.1) annulaire étant opposée à cet épaulement riveté (8.1) et est introduit par déformation, à proximité périphérique immédiate de l'ouverture d'assemblage (3), par écoulement dans la rainure annulaire (9),
**caractérisé en ce que**
l'élément d'assemblage (2, 2a) est placé, dans la première étape du procédé, dans l'ouverture d'assemblage (3) de telle sorte qu'il repose avec sa surface d'appui (5.1) contre la partie frontale du matériau plat (1) et l'épaulement riveté (8.1) est en saillie à partir de la partie frontale inférieure du matériau plat (1),
lors de la formation de l'outil (21) avec un poinçon (22), lequel est enserré par la deuxième partie d'outil (20) de type à matrice et est mobile par rapport à celle-ci, dans la troisième étape de procédé, l'élément d'assemblage (2, 2a), au niveau de sa surface frontale supérieure détournée du matériau plat (1), cet élément d'assemblage (2, 2a) s'appuyant contre le poinçon (22), à travers la première partie d'outil (18) sensée être mobile sur la deuxième partie d'outil (20) de type à matrice et par mouvement relatif axial entre le poinçon (22) et la deuxième partie d'outil (20) de type à matrice, déforme de telle sorte l'épaulement riveté (8.2) que l'épaulement riveté (8.2) ainsi déformé, dans une section partielle immédiatement adjacente au corps de l'élément d'assemblage (5), est de type à anneau circulaire ou essentiellement de type à anneau circulaire et uniquement, dans une section partielle y étant adjacente, est formé de type à joint conique avec une section transversale s'élargissant vers le bas, et
dans la quatrième étape de procédé, le poinçon (22), reposant sur le corps de l'élément d'assemblage (5), est incité à bouger sur la première partie d'outil (18), moyennant quoi la déformation de l'épaulement riveté (8.2) pré-déformé a lieu dans l'épaulement riveté (8.1) définitif et le rivetage définitif de l'élément fonctionnel (2, 2a) a lieu sur le matériau plat (1).

2. Procédé selon la revendication 1, **caractérisé en ce que** les étapes de procédé individuelles se recoupent au moins partiellement.

3. Procédé selon la revendication 2, **caractérisé en ce que** le rivetage définitif et le formage de l'épaulement riveté (8.1) ont lieu pendant le formage de la section en forme de dôme (4) ou sont pour le moins déclenchés encore pendant le formage de la section en forme de dôme (4).

4. Procédé selon une des revendications précédentes, **caractérisé en ce que** l'épaulement riveté (8.1) est produit par déformation de l'ensemble ou essentiellement de l'ensemble de la section à riveter (8.1) et/ou par rivetage.

5. Procédé selon une des revendications précédentes, **caractérisé en ce que** l'épaulement riveté (8.1) est formé de telle sorte que le matériau plat est logé serré dans la partie périphérique (19) entourant l'ouverture d'assemblage (3), entre l'épaulement riveté (8.1) et la surface d'appui (5.1) de l'élément fonctionnel (2, 2a) et ce par la formation d'une zone de serrage qui présente une épaisseur de matériau réduite en comparaison avec au moins une zone étant plus proche à un des axes de l'ouverture d'assemblage (3) et étant également agencée entre la surface d'appui et l'épaulement riveté (8.1) déformé.

6. Procédé selon une des revendications précédentes, **caractérisé en ce que** l'élément d'assemblage (2, 2a) est un écrou à riveter.

7. Procédé selon une des revendications précédentes, **caractérisé en ce que** l'élément d'assemblage ou fonctionnel est profilé au niveau des surfaces extérieures de la partie à riveter (8).

8. Procédé selon une des revendications précédentes, **caractérisé en ce que** le rivetage ou le formage de l'épaulement riveté (8.1) définitif a lieu de telle sorte que la partie périphérique (19) entourant l'ouverture d'assemblage est déformée dans une section en forme de dôme (23) serrée (23) entre l'épaulement riveté (8.1) et une surface (5.1) de l'élément d'assemblage (2a) étant opposée à l'épaulement riveté (8.1) et ainsi que dans une section annulaire (24) étant située à l'intérieur et s'étendant à partir de la section en forme de dôme (23) en direction de l'axe de l'ouverture d'assemblage (3) ou de l'élément d'assemblage (2a).

9. Procédé selon une des revendications précédentes, **caractérisé en ce qu'**au moins le formage de la partie périphérique (19) de type à joint torique entourant l'ouverture d'assemblage (3) et le rivetage définitif ont lieu de préférence dans un et même outil.
